# DEMANDE DE BREVET EUROPEEN

(11) **EP 1 564 879 A2**
(43) Date de publication de la demande: **17.08.2005**
(21) Numéro de dépôt: 05101090.8
(22) Date de dépôt: 14.02.2005
(51) Int. Cl.: H02N 1/00, B81B 7/00, F04B 19/00

(54) **Dispositif de contrôle du déplacement d'une goutte entre deux ou plusieurs substrats solides**

(30) Priorité: 16.02.2004 FR 0450276
(71) Demandeur: COMMISSARIAT A L'ENERGIE ATOMIQUE, 75752 Paris Cedex 15 (FR); CENTRE NATIONAL DE LA RECHERCHE SCIENTIFIQUE (CNRS), 75016 Paris (FR)
(72) Inventeur: ROUX, Jean-Maxime, 38000, GRENOBLE (FR); ACHARD, Jean-Luc, 38100, GRENOBLE (FR); FOUILLET, Yves, 38340, VOREPPE (FR)
(74) Mandataire: Poulin, Gérard

(57) **Abrégé**

L'invention concerne également un dispositif de déplacement réversible d'au moins un volume de liquide (10) sous l'effet d'une commande électrique, comprenant des premiers moyens électriquement conducteurs (8), des deuxième moyens électriquement conducteurs (4), et des moyens pour induire un déplacement réversible d'un volume de liquide, depuis les premiers moyens vers les deuxièmes moyens électriquement conducteurs, sans contact avec ces moyens conducteurs lors du déplacement.

## Description

### DOMAINE TECHNIQUE ET ART ANTERIEUR

La présente invention concerne le déplacement et le contrôle de micro-gouttes conductrices et éventuellement polaires dans un milieu liquide.

Il concerne plus particulièrement un déplacement de micro-gouttes conductrices dans un milieu liquide, diélectrique ou faiblement diélectrique et non miscible avec les gouttes, à l'aide de forces électro-hydrodynamiques, entre deux ou plusieurs positions pouvant correspondre à des zones de contact spécifique sur des substrats solides.

Les liquides ont une importance croissante dans les composants de petites dimensions. Ainsi, les laboratoires sur puce ou lab-on-chip font l'objet de nombreuses études principalement dans les domaines de la biologie, de la chimie, ou de l'optique. La micro-fluidique consiste dans certains cas à faire circuler des petits volumes de liquide dans des canaux micro-usinés. Une autre approche consiste à manipuler des petites gouttelettes de liquides. L'invention concerne les protocoles fluidiques caractérisés par cette dernière approche.

Si des dispositifs existent pour déplacer et contrôler une goutte sur un plan horizontal à l'aide d'une matrice d'électrodes, la situation est très différente pour ce qui concerne la troisième dimension, parallèle à l'axe de la gravité.

Soit une goutte posée sur un premier substrat, il serait intéressant de pouvoir manipuler cette goutte pour pouvoir l'amener sur un autre substrat, dans une zone correspondant à un site réactionnel spécifique et/ou de détection et/ou d'observation.

Il se pose donc le problème du contrôle du déplacement, notamment vertical, d'une goutte entre des substrats ou du déplacement d'une goutte d'un premier substrat vers un deuxième substrat, non contenu dans le même plan que le premier.

Un problème supplémentaire est celui de pouvoir déplacer une première fois une goutte pour la faire changer de substrat, puis de la déplacer de nouveau vers un autre substrat qui peut être son substrat de départ ou un troisième

Le document US 2002/0043463 décrit un dispositif permettant de contrôler le déplacement horizontal et vertical d'une goutte grâce à l'électromouillage. Le dispositif décrit dans ce document comporte deux chambres séparées par une plaque perforée comportant des orifices permettant le passage de la goutte manipulée d'une chambre à l'autre. Dans ce dispositif, la goutte est en permanence en contact avec la plaque perforée.

Ce dispositif permet d'exploiter les trois dimensions de l'espace pour déplacer une goutte mais présente des inconvénients majeurs pour la réalisation de protocoles biologiques et chimiques.

Tout d'abord, il est complexe d'un point de vue technologique : il met en oeuvre 3 niveaux de substrats, ce qui pose un problème d'étanchéité, et des problèmes d'alignement ; en outre cette complexité technologique a un coût.

Des problèmes de contamination et/ou de biocompatibilité risquent également de se présenter compte tenu de la grande surface de contact goutte/substrat. En effet, la goutte est confinée entre deux plaques lorsqu'elle est située dans une des deux chambres et doit s'écouler à travers un orifice pour changer de chambre.

Enfin, la géométrie du dispositif comportant de nombreux recoins le rend peu aisé à nettoyer et donc accroît le risque de contamination, en particulier si des réactions différentes sont successivement réalisées avec le même dispositif. Ces problèmes sont critiques si le dispositif est employé dans des réactions mettant en jeu des échantillons biologiques, en particulier dans le cadre d'une utilisation à des fins d'analyse.

Un dispositif n'ayant pas ces problèmes est décrit par Pramod Kolar dans un rapport disponible sur le site Internet : http://www.ee.duke.edu/~pkolar.

Le système est composé de deux plaques parallèles, comme dans le document précédent, et comporte un fil à la place de la plaque intermédiaire. Initialement la goutte est posée sur la plaque inférieure tout en étant au contact du fil puis, sous l'effet d'un champ électrique non uniforme appliqué entre le fil et l'électrode supérieure, la goutte est soumise à une force orientée verticalement qui provoque son déplacement vers la plaque supérieure. Le fil électrique, tel qu'il est présenté par Pramod Kolar, sert notamment à déformer considérablement le champ électrique, à le rendre non uniforme.

Le dispositif décrit par P.Kolar comporte, pour la plaque supérieure, un substrat destiné à être fonctionnalisé et à devenir une puce à ADN. Les gouttes peuvent contenir de l'ADN destiné à être greffé sur la surface. Ce dispositif sert à adresser les gouttes contenant les sondes et la méthode est présentée comme une méthode concurrente des méthodes habituellement utilisées en laboratoire pour obtenir une puce à ADN.

Dans ce dispositif les gouttes manipulées verticalement sont malheureusement à usage unique, puisqu'elles mouillent la surface de la plaque supérieure du substrat et ne peuvent donc pas être réutilisées. Cet inconvénient rend le dispositif inutilisable pour la réalisation de protocoles chimiques et/ou biologiques, puisqu'il provoque la perte du micro-réacteur manipulé. Cet inconvénient limite considérablement la portée de cette autre invention.

Il se pose donc le problème de trouver un procédé permettant de réaliser et de contrôler le transfert d'une goutte de liquide, depuis un premier substrat vers un deuxième substrat situé dans un plan différent, et/ou de réaliser des protocoles chimiques et/ou biologiques en manipulant des gouttes, en réduisant les problèmes de contamination des gouttes et/ou de réactifs et/ou d'échantillons qui s'avèrent critiques notamment pour la réalisation de protocoles chimiques et/ou biologiques.

Un autre problème est celui de la réutilisation d'une goutte après transfert d'un premier substrat vers un deuxième substrat, ainsi que de la réutilisation d'un dispositif ou de substrats ayant permis un tel transfert.

Il se pose également le problème du contrôle du transfert du deuxième substrat vers le premier, c'est-à-dire d'un déplacement réversible.

Encore un autre problème est celui du contrôle temporel du séjour d'une goutte sur un substrat donné.

### EXPOSÉ DE L'INVENTION

L'invention concerne d'abord un dispositif de déplacement d'au moins un petit volume de liquide sous l'effet d'une commande électrique, comprenant un premier substrat comportant des premiers moyens électriquement conducteurs, et un deuxième substrat, comportant des deuxième moyens électriquement conducteurs, et des moyens pour induire un déplacement réversible d'un volume de liquide, depuis les premiers moyens vers les deuxièmes moyens électriquement conducteurs, sans contact avec ces moyens conducteurs lors du déplacement.

L'invention met en oeuvre des forces électriques entre deux substrats, qui permettent un déplacement d'au moins une goutte, initialement posée et en mouillage partiel sur le premier substrat, vers un deuxième substrat, comportant des deuxièmes moyens électriquement conducteurs sur lequel elle peut être immobilisée et maintenue selon une durée contrôlée.

Les deux substrats peuvent être plans.

Le déplacement de la goutte est réversible et sans contact avec les substrats ou les électrodes lors du déplacement.

Les deuxièmes moyens électriquement conducteurs peuvent être recouverts d'une couche d'un matériau diélectrique non mouillant ou faiblement mouillant pour le liquide du petit volume de liquide.

Un contact entre la goutte et le deuxième substrat est alors de durée contrôlable du fait du caractère non ou faiblement mouillant du diélectrique qui recouvre les deuxièmes moyens électriquement conducteurs.

L'invention concerne donc également un dispositif de déplacement d'au moins un petit volume de liquide sous l'effet d'une commande électrique, comprenant un premier substrat comportant des premiers moyens électriquement conducteurs, et un deuxième substrat, comportant des deuxième moyens électriquement conducteurs, des moyens pour charger électriquement une goutte, des moyens pour déplacer une goutte chargée des premiers moyens vers les deuxièmes moyens électriquement conducteurs, sans contact avec ces moyens électriquement conducteurs, et des moyens pour maintenir une goutte en contact non mouillant contre le deuxième substrat.

Les premiers moyens électriquement conducteurs peuvent être hydrophobes.

Ils peuvent également être recouverts d'une couche de matériau diélectrique, également non mouillant par le liquide du petit volume de liquide, et comporter des moyens de transfert de charges, par exemple un fil, qui peuvent être situés au voisinage ou contre cette couche de matériau diélectrique.

Selon une variante, les premiers moyens électriquement conducteurs comportent au moins trois électrodes, des premier et deuxième moyens de transfert de charge étant respectivement situés au voisinage de deux électrodes non voisines.

Les premiers moyens électriquement conducteurs et/ou les seconds moyens électriquement conducteurs peuvent comporter une matrice d'électrodes, s'étendant suivant une ou deux dimensions.

Afin de pouvoir mettre les gouttes en contact avec des surfaces à différentes températures, au moins l'un des substrats, peut être muni de moyens de contrôle de la température et/ou de tout autre moyen de détection et/ou d'observation.

L'invention concerne également un procédé de déplacement d'un volume de liquide, dans lequel ledit volume est initialement en contact avec un premier substrat comportant des premiers moyens électriquement conducteurs, ce procédé comportant l'application d'une tension entre ces premiers moyens électriquement conducteurs et un second substrat comportant des seconds moyens électriquement conducteurs, et distants du premier substrat, d'une distance supérieure au diamètre du volume de liquide à déplacer.

Le déplacement d'une goutte comporte une phase durant laquelle celle-ci n'est en contact avec aucune surface solide. En outre le déplacement est réversible : la goutte, après avoir été transférée sur le deuxième substrat, peut être ramenée sur le premier substrat, par exemple par une intervention sur le champ électrique imposé. L'invention permet ainsi un va et vient de la goutte entre deux substrats.

Les gouttes déplacées peuvent être réemployées quelle que soit la direction de l'espace suivant laquelle elles ont été déplacées précédemment.

L'invention permet donc, à l'aide de forces électriques, le déplacement d'une goutte entre deux ou plusieurs positions situées sur des substrats solides éventuellement fonctionnalisés et/ou équipés de dispositifs miniaturisables, tels que des systèmes de contrôle de la température, et/ou de tout autre moyen de détection et/ou d'observation.

Elle permet aussi le maintient de la goutte sur la position imposée pendant une durée programmée.

Le premier substrat peut en outre comporter, sur les premiers moyens conducteurs, une couche de matériau diélectrique non mouillant pour le volume de liquide, des moyens de transfert de charge étant associés au premier substrat pour transférer une charge électrique depuis le volume de liquide lorsque celui-ci est en contact avec ladite couche de matériau diélectrique.

Le second substrat peut comporter une couche de matériau diélectrique non mouillant par le liquide dont est constitué le volume de liquide, cette couche étant associée aux, ou située sur ou contre, les seconds moyens conducteurs.

Après déplacement vers le second substrat le volume de liquide peut être maintenu contre la couche de matériau diélectrique présente sur les deuxièmes moyens électriquement conducteurs.

Des moyens de transfert de charge peuvent être associés au second substrat pour transférer une charge électrique depuis le volume de liquide lorsque celui-ci est en contact avec le second substrat.

Après déplacement, le volume de liquide peut ensuite être ramené sur le premier substrat, par exemple en imposant un champ électrique de sens opposé à celui employé pour transférer la goutte du premier substrat vers le second substrat.

Selon un mode de réalisation les premiers moyens électriquement conducteurs comportent une première matrice d'électrodes, isolées des milieux liquides par un diélectrique et un revêtement hydrophobe, le volume de liquide en contact avec ce revêtement hydrophobe et une électrode transfert de charges pouvant, avant ou après déplacement vers le second substrat, être déplacé en outre le long du premier substrat, par activation successive de différentes électrodes de la première matrice d'électrodes.

Selon un autre mode de réalisation, les premiers moyens électriquement conducteurs sont constitués d'une électrode super-hydrophobe, et les deuxièmes moyens électriquement conducteurs par une matrice d'électrodes recouverte d'un revêtement diélectrique et avantageusement hydrophobe. Il est alors possible de réaliser, à l'aide de forces électrostatiques des déplacements verticaux et horizontaux sur le deuxième substrat.

Selon un autre mode de réalisation, les premiers et seconds moyens électriquement conducteurs comportent une première et une seconde matrice d'électrodes.

Selon un exemple de mouvement possible, le volume de liquide peut être déplacé d'une électrode de la première matrice d'électrodes vers une électrode de la deuxième matrice d'électrodes puis déplacé sur le deuxième substrat et/ou être ramené sur une électrode de la première matrice, égale ou différente de l'électrode de départ.

Au moins deux électrodes de la première matrice et/ou au moins deux électrodes de la seconde matrice peuvent être portées à des températures différentes entre elles.

En outre, les premier et second substrats peuvent être portés à des températures différentes entre elles.

Enfin, le dispositif et le procédé selon l'invention peuvent être mis en oeuvre en imposant un champ uniforme entre les deux électrodes et/ou matrices d'électrodes en regard.

### DESCRIPTION SOMMAIRE DES FIGURES

- La figure 1 représente schématiquement un mode de réalisation de l'invention,
- la figure 2 représente schématiquement une variante du dispositif présenté sur la figure 1, qui se distingue par l'emploi d'un fil au lieu d'un plan comme électrode de transfert de charges électriques,
- la figure 3 représente très schématiquement une variante particulière de l'invention caractérisée par la présence de deux électrodes de transfert de charges électriques.
- la figure 4 représente schématiquement une variante du dispositif présenté sur la figure 2.
- la figure 5 représente un autre mode de réalisation de l'invention.
- les figures 6A et 6B représentent schématiquement une variante de la figure 4 telle que le déplacement vertical des gouttes puisse être organisé selon les zones,
- les figures 7A et 7B représentent schématiquement un dispositif original de déplacement de gouttes entre deux lignes d'électrodes sur lesquelles la goutte peut être déplacée par électromouillage, la figure 7A représentant schématiquement la disposition des électrodes employées pour le déplacement horizontal avec un caténaire sur chacune des deux lignes d'électrodes, la figure 7B étant une coupe verticale effectuée au niveau de la colonne d'électrodes perpendiculairement aux caténaires,
- la figure 8 représente schématiquement une variante de la figure 4 comprenant des dispositifs de contrôle de la température des substrats schématiquement représentés.
- la figure 9 représente schématiquement une surface hydrophobe, à tapis de nanofibres gainées par un polymère.

### DESCRIPTION DETAILLEE DE MODES PARTICULIERS DE REALISATION

Les dispositifs présentés seront illustrés avec une seule goutte mais plusieurs gouttes pourront être manipulés en même temps dans ces dispositifs.

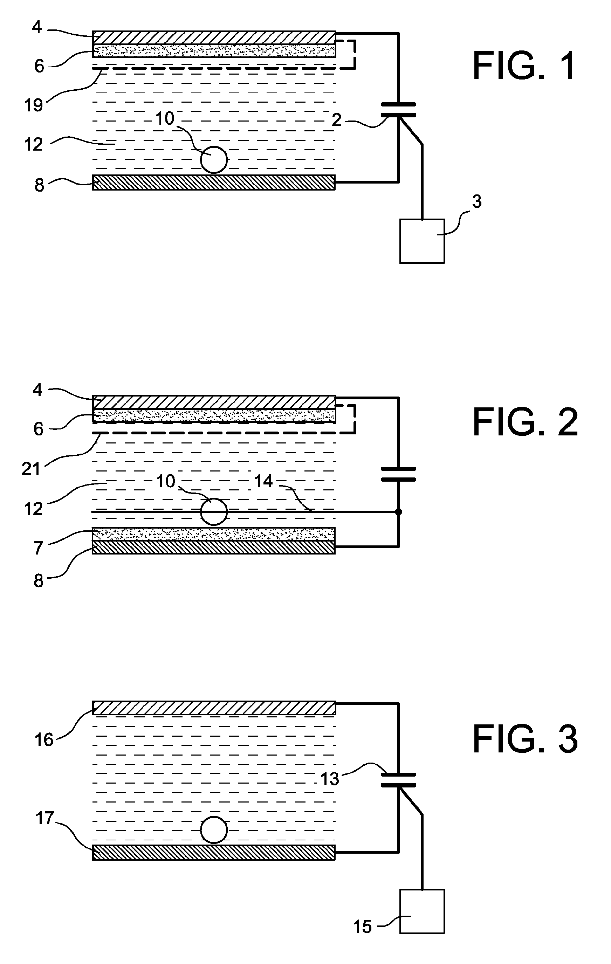

La figure 1 représente un premier mode de réalisation de l'invention, qui illustre la possibilité de déplacer une goutte en imposant un champ électrique, de préférence uniforme.

En particulier, il n'est pas nécessaire d'imposer une déformation des lignes de champ électrique comme dans l'article de Pramod Kalor à l'aide d'un fil électrique.

Ce dispositif selon l'invention comporte un générateur/amplificateur de tension 2 éventuellement programmable ou piloté par un dispositif 3 informatisé, une électrode 4, revêtue d'un diélectrique 6 qui est non mouillant ou faiblement mouillant par la solution dont la goutte est issue. Ce revêtement ne laisse pas traverser de charges électriques et est avantageusement biocompatible.

Une électrode 8, avantageusement chimiquement inerte et biocompatible constitue une électrode de transfert de charges. Si l'électrode 8 est trop mouillée par une goutte 10, cette dernière risque de ne pas pouvoir « décoller » et c'est pourquoi l'électrode 8 est, de préférence, rendue non mouillante ou faiblement mouillante (hydrophobe).

Tous les moyens connus pour la rendre hydrophobe et/ou biocompatible peuvent être mis en oeuvre. On peut pour cela par exemple, structurer la surface et/ou utiliser du Téflon (en épaisseur suffisamment faible, typiquement une centaine de nanomètres).

Une goutte 10, par exemple de quelques nanolitres à quelques microlitres, est issue d'une solution conductrice et est initialement posée sur l'électrode inférieure 8.

La distance entre les deux surfaces entre lesquelles la goutte se déplace est supérieure au diamètre de la goutte, et est de préférence au moins de l'ordre de 2 fois le diamètre de la goutte.

Elle est par exemple comprise entre 100 µm ou 150 µm ou 500 µm et 1 mm ou quelques mm, par exemple 5 mm.

Ainsi le transfert d'une goutte comporte une phase durant laquelle la goutte n'est en contact avec aucun des substrats 6, 8.

La goutte est en contact avec au maximum un seul des deux substrats, ce qui permet de minimiser la surface de contact goutte/substrat, et donc de réduire les risques de contamination (par des entités chimiques et/ou biologiques) avec les surfaces.

Ces considérations relatives à la distance entre les surfaces des substrats et ses conséquences s'appliquent aussi à tous les modes de réalisation présentés dans la suite.

Un liquide diélectrique 12 non miscible avec la solution dont la goutte est composée baigne l'espace entre les deux électrodes.

La goutte est mise en mouvement par application d'une tension électrique continue d'intensité suffisante, entre les deux électrodes 4,8. Sous l'effet de la force électrique induite par le champ électrique imposé, la goutte chargée est déplacée verticalement et vient contre le diélectrique 6, qui isole l'électrode supérieure 4.

La goutte peut être maintenue contre le diélectrique 6, en position haute, à l'aide de cette même force électrique, tant que le champ électrique est maintenu : en effet il n'y a alors pas de transfert de charges entre la goutte et l'électrode 4 ; le champ continue donc d'avoir un effet sur les charges portées par la goutte.

La goutte peut être ramenée en position basse, soit en imposant une tension nulle aux bornes du dispositif, et donc en utilisant le seul poids de la goutte, soit en imposant brièvement un champ électrique de sens opposé à celui précédemment employé, et ce pour forcer le mouvement de la goutte à l'aide d'une force électrique qui va agir sur les charges portées par la goutte.

Enfin, une fois la goutte proche de l'électrode inférieure 8, elle se décharge contre celle-ci. Une tension nulle est imposée aux bornes du dispositif pour la maintenir en position basse. En effet, si un champ électrique existe alors que la goutte est en contact avec l'électrode de transfert de charges, la situation est similaire à celle décrite précédemment et conduit au départ de la goutte de l'électrode de transfert de charges électriques ; la goutte semblera rebondir et retournera s'immobiliser en position haute.

A titre d'exemple de paramètres et dimensions, on peut indiquer :
- pour la goutte : 2 µl d'une solution d'eau salée,
- pour les électrodes : électrodes distantes de 1 centimètre,
- pour l'alimentation : +/- 2000 Volt en continu,
- pour le diélectrique 6 : une plaque de téflon de 1 millimètre d'épaisseur
- pour le liquide diélectrique 12 : de l'huile minérale légère fournie par Sigma, dont la densité peut être de l'ordre de 0,8.

La figure 2 représente une variante du dispositif présenté sur la figure 1, dans laquelle la surface de contact goutte 10 - électrode de transfert 8 est considérablement réduite et le problème de l'accrochage non piloté de la goutte sur un site de l'électrode 8, par mouillage, est pratiquement nul.

Ce dispositif reprend donc celui de la figure 1, et il lui est ajouté une couche 7 en matériau diélectrique non mouillant par la solution dont la goutte est issue et avantageusement biocompatible. Le transfert de charges à travers ce diélectrique ne peut avoir lieu.

Un fil électrique 14, de diamètre très inférieur à celui de la goutte 10, joue le rôle d'électrode de transfert de charges électriques et est avantageusement chimiquement inerte et/ou biocompatible et/ou hydrophobe.

Le rôle du fil 14 est de permettre le transfert de charges électriques : la position de ce fil n'à pas de grande importance, tant qu'il y a un contact électrode-goutte permettant le transfert de charges électriques entre ce fil 14 et la goutte 10 lorsque cette dernière est en contact avec la couche 7. En particulier, il est possible de déposer un fil sur la surface supérieure du diélectrique 7. A titre d'exemple, ce fil est en or.

Un liquide diélectrique 12, non miscible avec la solution dont la goutte est composée, baigne le milieu entre les deux diélectriques.

Le fonctionnement de ce dispositif est le même que dans le premier mode de réalisation exposé en liaison avec la figure 1, mais le transfert de charge, en position basse, est assuré par le fil 14. Ainsi, si un champ électrique existe alors que la goutte est en contact avec une électrode de transfert de charges, la goutte retournera s'immobiliser en position haute. Les mêmes considérations que ci-dessus sont valables en ce qui concerne les contacts avec les substrats et l'absence de contact lors du déplacement d'un substrat à l'autre. Les mêmes exemples de paramètres et de dimensions que ceux déjà donnés peuvent être retenus pour cette variante.

Un dispositif selon ce mode de réalisation comporte donc un système avec au moins deux électrodes pour imposer un champ électrique, et une électrode 14 de transfert de charges électriques avec laquelle une goutte à déplacer n'est pas en contact permanent. Cette électrode 14 de transfert peut être une des électrodes créant le champ électrique.

Un contact électrique entre la goutte à déplacer et l'électrode 14 de transfert de charge est d'abord établi, en particulier au moment où le mouvement vertical de la goutte va être provoqué pour la première fois.

L'application d'un champ électrique va provoquer le transfert de charges électriques vers la goutte. Une fois cette étape réalisée, la goutte quitte son site de départ, et donc l'électrode de transfert, sous l'effet d'une force électrique induite par le champ électrique imposé, pour se rendre vers un autre site appartenant à un autre substrat (le substrat 6) et sur lequel la goutte peut être maintenue à l'aide de la même force électrique. Pour remettre la goutte en mouvement et en particulier la renvoyer vers le site d'où elle vient, on inverse le sens du champ électrique pendant le temps du retour. Ceci inverse le sens de la force électrique à laquelle la goutte est soumise et force son départ du substrat 6 sur lequel elle a été maintenue précédemment.

La figure 3 présente un autre mode de réalisation, avec une électrode 16, 17 de transfert de charges électriques pour chaque position (« haute » et « basse »), et un générateur amplificateur de tension 13 éventuellement programmable ou piloté par des moyens 15 informatisés.

Les électrodes de transfert de charges électriques sont représentées sur la figure 3 très schématiquement et, en particulier, leur forme n'est pas précisée. Elles peuvent être planes comme le suggère la figure ou non. Un fil électrique peut, par exemple, être employé pour l'une ou l'autre de ces électrodes de transfert de charges. Ces électrodes peuvent être recouvertes d'un revêtement à la condition que le transfert de charges reste possible. En particulier, si un diélectrique est employé, il doit être suffisamment mince pour permettre ce transfert.

Il est possible de réaliser la variante présentée sur la figure 3 en ajoutant un fil électrique relié à l'électrode supérieure 4 dans la partie haute des dispositifs présentés sur les figures 1 et 2 : ces fils 19, 21 sont représentés en traits interrompus sur les figures 1 et 2.

Le dispositif présenté sur la figure 2 devient alors symétrique, les deux positions « haute » et « basse » étant identiques.

Le comportement d'une goutte dans un tel dispositif, avec transfert de charge du côté des deux substrats, est différent de celui d'une goutte dans les autres dispositifs, dans lesquels il n'y a transfert de charge qu'au niveau du substrat inférieur. En effet, dans la configuration de la figure 3, lorsqu'un champ électrique continu suffisamment fort est appliqué, la goutte ne possède aucune position d'équilibre stable et se déplace sans cesse d'une électrode à l'autre. Chaque électrode permet le transfert des charges portées par la goutte.

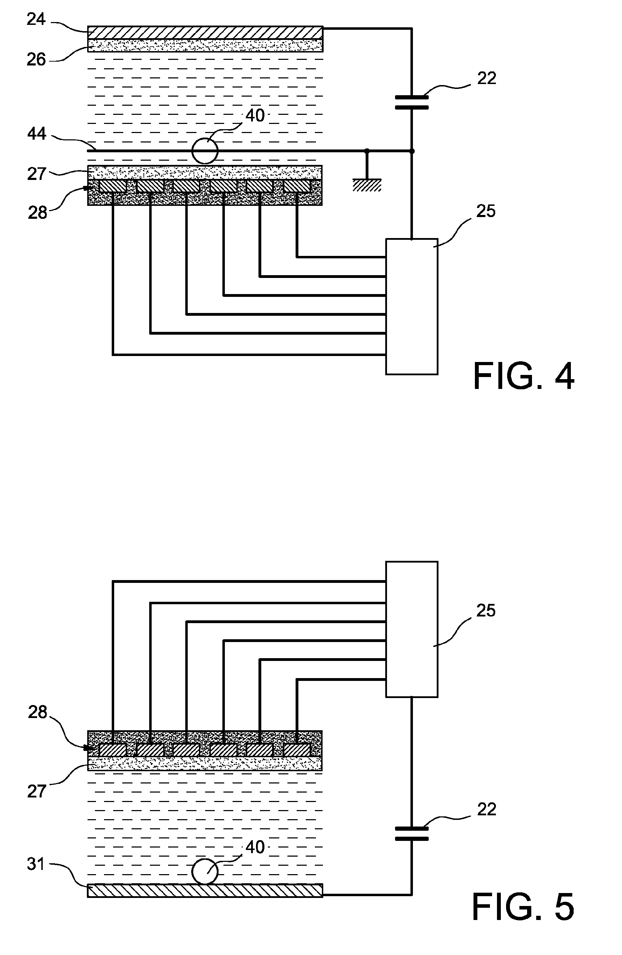

La figure 4 présente une variante du dispositif présenté sur la figure 2, variante qui comporte un générateur amplificateur de tension 22, éventuellement programmable ou piloté par un dispositif informatisé, une électrode supérieure 24, une matrice inférieure d'électrodes 28, et un dispositif ou des moyens 25, éventuellement programmables, de contrôle des électrodes de cette matrice et éventuellement du générateur 22.

Deux diélectriques 26,27, non mouillants par la solution dont la goutte est issue, et avantageusement biocompatibles, recouvrent les électrodes. Les charges ne peuvent être transférées à travers ces diélectriques.

Un fil électrique 44, de diamètre très inférieur à celui de la goutte, joue le rôle d'électrode de transfert des charges électriques. Il est avantageusement chimiquement inerte et/ou biocompatible et/ou hydrophobe.

La position de ce fil est indifférente tant qu'il y a un contact électrode - goutte, permettant le transfert de charges électriques entre le fil et la goutte lorsque celle-ci est en position basse. En particulier, il est possible de déposer un fil sur la surface supérieure du diélectrique 27.

Une goutte 40 issue d'une solution conductrice est initialement posée sur le diélectrique 27.

Un liquide diélectrique, non miscible avec la solution dont la goutte est composée, baigne le milieu entre les deux diélectriques.

Selon ce mode de réalisation, il est possible de contrôler le déplacement horizontal de la goutte, par électromouillage, selon le procédé décrit dans le document FR 02 07477, et ce à l'aide du fil conducteur 44 : en activant successivement les différentes électrodes de la matrice 28, on peut faire déplacer la goutte 40. Mais conformément à l'invention, on peut aussi la faire se déplacer verticalement selon les mêmes principes que ci-dessus. On pourra donc avoir un déplacement d'abord horizontal ou suivant le plan de la couche 27 (comme décrit dans le document cité ci-dessus) puis vers le deuxième substrat, ou l'inverse, donc un déplacement en 3 dimensions.

Le dispositif selon l'invention est donc compatible avec un déplacement de gouttes par électromouillage sur un substrat horizontal.

Selon encore une autre variante, en remplaçant l'électrode supérieure par une matrice d'électrodes, il est possible de manipuler verticalement plusieurs gouttes de façon indépendante ou de disposer de plusieurs sites réactionnels.

La figure 5 présente un mode de réalisation de l'invention dans lequel la goutte peut être, à l'aide de forces électrostatiques et sans recours à l'électromouillage dont il a été question avec le dispositif présenté figure 4, déplacé dans le plan horizontal.

La goutte 40, posée sur une électrode super-hydrophobe 31, peut être déplacée verticalement en imposant une tension entre les deux électrodes entre lesquelles est située la goutte et horizontalement en imposant une tension entre une électrode de la matrice 28 différente de celle sous laquelle la goutte est située.

Les opérations de maintien de la goutte en position haute et de retour de la goutte en position basse s'effectuent comme il a été précisé dans les dispositifs déjà décrits.

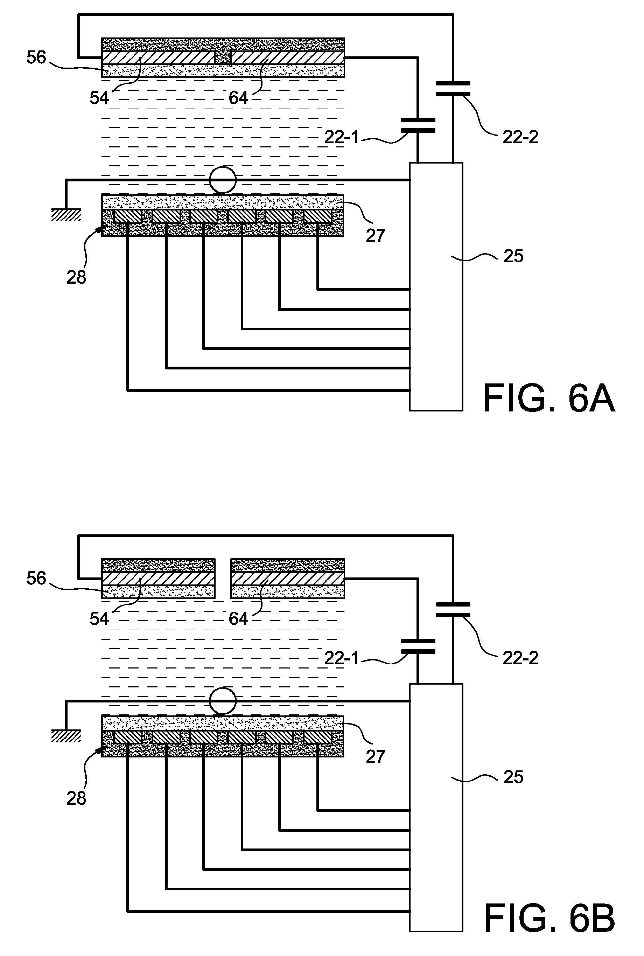

La figure 6A présente une autre variante dans lequel l'électrode supérieure est remplacée par deux électrodes 54,64.

Les autres éléments de cette figure sont similaires ou identiques à ceux de la figure 4 (avec deux générateurs de tension 22-1, 22-2). Le fonctionnement de ce dispositif peut être le même que celui de la figure 4, avec en plus la faculté de moduler la tension de chacune des deux électrodes 54, 64, et le mouvement de la goutte vers l'une ou l'autre de ces deux électrodes 54, 64.

La figure 6B présente une variante du dispositif de la figure 6A, dans laquelle, à chaque électrode supérieure correspond un substrat particulier.

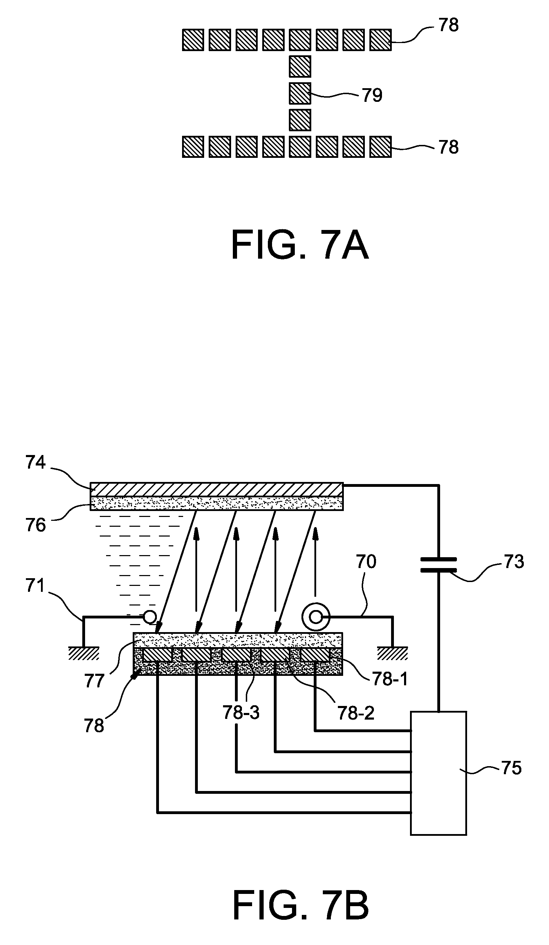

Les figure 7A et 7B présentent un dispositif dans lequel il est possible d'opérer un mouvement équivalent à un déplacement horizontal en se détachant temporairement du caténaire. Plus précisément, soient deux matrices 78, 79, d'électrodes en ligne employées pour déplacer une goutte par électromouillage, selon la méthode décrite dans le document FR - 02 07477. Ces deux matrices sont représentées en vue de dessus sur la figure 7A.

La goutte, initialement positionnée au-dessus de l'électrode 78 - 1 et en contact avec une électrode de transfert, est chargée électriquement sous l'effet du champ électrique imposé puis, après déplacement, plaquée contre le diélectrique 76 isolant l'électrode supérieure 74 par une force électrique. Des moyens 73 générateurs de tension et des moyens 75, éventuellement programmables, de commande de la matrice d'électrodes 78 - i et du générateur 73, permettent de piloter l'application des tensions aux électrodes voulues.

Il est ensuite possible, à l'aide d'un champ électrique, en polarisant l'électrode 78 - 2, de redescendre la goutte non pas à sa position initiale (au-dessus de l'électrode 78 - 1) mais vers une position adjacente à sa position initiale. La goutte n'a alors jamais touché de conducteur depuis son départ forcé et possède donc encore une charge électrique. La goutte peut ensuite être amenée en position « haute » comme précédemment puis redescendue à côté de sa position « basse » précédente selon la méthode déjà employée. Peu à peu, la goutte est décalée et passe d'une ligne à l'autre selon le parcours fléché représenté sur la figure 7B.

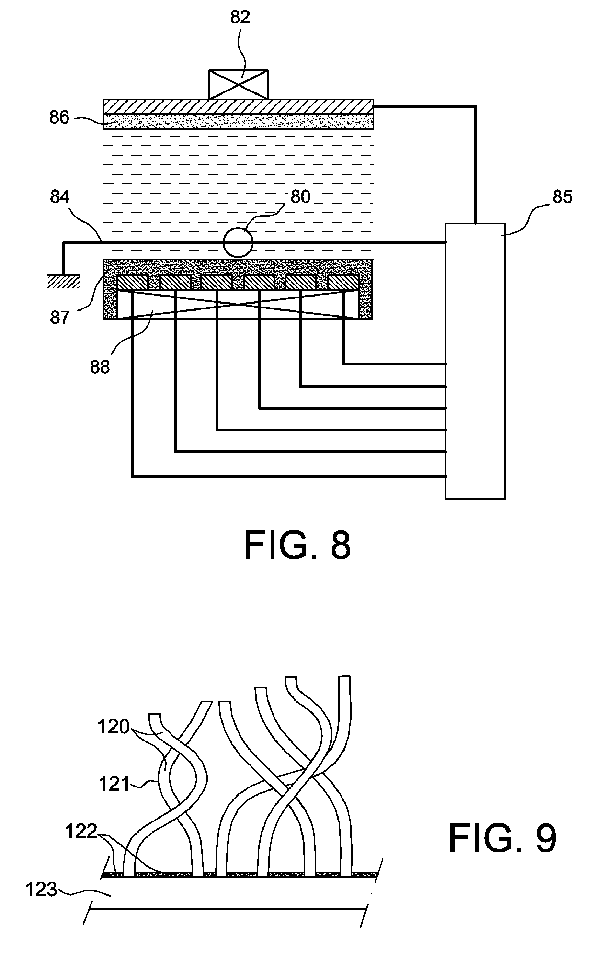

La figure 8 représente un mode de réalisation dans lequel chaque plaque est similaire à celle illustrée sur la figure 7B, et est reliée à un dispositif 82, 88 de contrôle de la température.

Le mode de réalisation de la figure 8 comporte une électrode de transfert longitudinale 84, comme sur la figure 5 par exemple et avec les mêmes fonctions.

A chaque changement de plaque, la goutte peut changer de température si les plaques sont portées à des températures différentes par les moyens 82 et 88.

En plus des changements de température imposés, il est possible de réaliser un cheminement des gouttes conformément à ce qui a été expliqué ci-dessus en liaison avec la figure 4 par exemple.

Des moyens de contrôle de température peuvent être appliqués également à chacun des dispositifs des figures 1-7B, sur une ou plusieurs des électrodes de ces dispositifs, ou sur un ou plusieurs segments du substrat, sur lequel les électrodes sont gravées.

En particulier, dans le cas de la figure 6A, ce sont 3 dispositifs de contrôle de température qui peuvent être utilisés, deux en combinaison avec les électrodes 54, 64 et un pour contrôler la température de la matrice d'électrode 28.

Ainsi, on peut réaliser un cyclage thermique à une goutte entre 2 températures (figure 8) ou 3 températures.

Parmi les applications de l'invention, on peut citer la Polymerase Chain Reaction (PCR) qui est une réaction dont il est possible, grâce à l'invention, de réduire la durée. En effet, cette réaction requiert la réalisation d'un long cycle thermique. Elle consiste en un cyclage thermique entre deux ou trois températures d'un mélange réactionnel et est classiquement réalisée en très petites quantités, de l'ordre de quelques microlitres.

Soient des micro-gouttes issues du mélange réactionnel appelé usuellement mix-PCR. Elles peuvent être transférées rapidement d'une plaque à l'autre du dispositif présenté schématiquement sur la figure 8, sous l'action d'un champ électrique adéquat.

Chaque plaque est reliée à un dispositif 82, 88 de contrôle de température. Les deux plaques peuvent donc être portées à des températures différentes. Dans ce cas, à chaque changement de plaque, la goutte change de température. Des réactions de PCR peuvent être effectuées à deux températures, et donc les deux seules positions plaque haute/plaque basse suffisent à la réalisation du protocole

Pour réaliser les protocoles de PCR à trois températures, on utilise trois sites de chauffage, comme expliqué ci-dessus. Un dispositif de déplacement de gouttes, déjà décrit ci-dessus, permet de déplacer horizontalement une ou plusieurs gouttes et de les amener par exemple sous un site de chauffage donné. Si deux sites de chauffage sont présents sur deux électrodes telles que les électrodes 54, 64 des figures 6A et 6B, avec un dispositif de chauffage régulant la température du substrat dans lequel la matrice d'électrodes (28) a été gravée. Il est alors possible de faire subir un cyclage thermique entre trois températures à une goutte et donc de réaliser une PCR à trois températures.

Le temps de transfert du mélange réactionnel entre une température et une autre est alors extrêmement faible, voire négligeable, par rapport à celui des dispositifs classiques qui effectuent les changements de température en quelques secondes.

Il existe bien sur d'autres applications que la PCR :
Par exemple, il est possible, avec le dispositif de l'invention, d'étudier certains paramètres physiques des gouttes manipulées. Soit une goutte placée au-dessus d'une électrode : il est possible, en la soumettant à un champ alternatif adéquat, de la faire vibrer. L'observation et l'étude des modes de vibration adoptés par la goutte renseignent sur certains paramètres rhéologiques (viscosité, tension superficielle,...).

D'une manière générale, quel que soit le mode de réalisation envisagé, l'invention permet le déplacement d'une goutte selon deux ou trois directions de l'espace, en autorisant la réutilisation d'une goutte déplacée.

Quel que soit le mode de réalisation envisagé, l'invention permet des déplacements très rapides (de quelques dizaines à quelques centaines de millisecondes) d'au moins une goutte entre deux positions particulières. Cette propriété peut être exploitée dans le but de réduire les temps de réalisation de certains protocoles chimiques et/ou biologiques, en particulier lorsque des cycles doivent être réalisés.

Les problèmes de contamination et/ou biocompatibilité sont réduits à leur strict minimum. Par ailleurs, le contact goutte/électrode est à durée contrôlable.

Quel que soit le mode de réalisation, la goutte n'entre en contact qu'avec un seul substrat à la fois. Ceci permet de minimiser la surface de contact goutte/substrat et donc de réduire les risques de contamination avec les surfaces du composant (entités chimiques et/ou biologiques absorbées). De plus, si une goutte doit être chauffée puis refroidie, elle n'est en contact qu'avec un seul substrat ; le contact simultané avec un second substrat se traduirait par des pertes thermiques, ce qui est évité avec la présente invention.

Enfin la surface de contact goutte/substrat est ajustable en jouant sur la nature des revêtements et des tensions utilisées qui conditionnent les impacts.

Un dispositif selon l'invention peut être réalisé à l'aide des procédés des micro-technologies. Par exemple, sur un substrat en verre, on réalise une matrice d'électrodes 28 en or d'épaisseur 0.2 µm. Une première couche de passivation est obtenue par un dépôt de nitrure de silicium Si3N4 (PECVD) d'épaisseur 0.2 µm. Puis, on utilise une résine (EPON-SU8) de 100 µm d'épaisseur pour former un cadre servant de support au microcaténaire 44. Pour rendre la surface hydrophobe avec peu d'hystérésis, on peut utiliser un silane (ex : Octadécylitrichlorosilane), ou un recouvrement de parylène, ou un revêtement Téflon.

De bons résultats ont été obtenus avec une couche de Téflon AF 1601S (DuPont). Pour avoir une couche homogène et de faible épaisseur (1 µm), le Téflon est déposé à la tournette (spin-coating).

Après découpe du substrat, les puces sont collées à un boîtier standard en céramique. Une machine de câblage filaire (ball bonding) classiquement utilisée en microélectronique, permet de réaliser les microcaténaires et des ponts électriques pour connecter les électrodes au boîtier. Les fils employés ont par exemple un diamètre de 25 µm et sont en or.

Selon une variante, les électrodes de transfert de charges peuvent être des lignes structurées par microtechnologie directement sur le diélectrique qui isole les électrodes de la matrice. La surface est ensuite rendue hydrophobe par le dépôt d'une couche de Téflon, typiquement d'une centaine de nanomètres d'épaisseur.

Selon une autre variante, les matrices d'électrodes peuvent être des matrices actives. On pourra se référer à ce sujet au brevet WO 03/045556 A2.

Le capot du dispositif est une surface de verre dont la face inférieure a été couverte d'une couche mince, conductrice et optiquement transparente d'ITO (indium tin oxyde). Cette couche constitue l'électrode supérieure du dispositif. Elle est isolée et rendue hydrophobe par un dépôt de Téflon AF 1601S (DuPont).

Un tel procédé peut être adapté à la réalisation de dispositifs selon l'un ou l'autre des modes de réalisation décrits ci-dessus.

Les dispositifs de chauffages 82 seront par exemple des résistances chauffantes ou des modules à effet Peltier.

Dans certaines configurations (en particulier celle des figures 1 (électrode 8), 3 (électrode 17 et/ou 16), et 5 (électrode 31)) on cherche à disposer de surfaces à la fois très hydrophobes, pour limiter les forces capillaires pouvant s'opposer aux déplacements des gouttelettes, et conductrices. Ces contraintes semblent antagonistes dans la mesure où les surfaces conductrices sont généralement métalliques et les métaux sont plutôt hydrophiles.

Il est possible de lever cette contradiction en employant, dans un dispositif et un procédé selon l'invention, une surface conductrice et recouverte d'un film polymère hydrophobe suffisamment mince pour permettre le transfert de charges électriques. Il est en particulier possible d'employer une surface conductrice texturée, c'est-à-dire rugueuse, et recouverte d'un film polymère très mince et non mouillant par la goutte.

Un exemple de réalisation d'un tel film est décrit dans le document FR - 03 51137, qui concerne notamment la réalisation de polymères super hydrophobes obtenu par voie sèche et physique. En effet les nano-tubes de carbone (NTC) sont conducteurs et leur dépôt sur une surface conductrice permet de texturer celle-ci; un film polymère permet de rendre la surface non mouillante.

Plus précisément, un dispositif à surface hydrophobe et/ou lipophobe peut comporter un tapis nanofibres, par exemple de carbone, ces nanofibres de carbone étant gainées ou totalement gainées par un film polymère hydrophobe et/ou lipophobe continu, par exemple du polysiloxane ou un polymère carbofluoré, la surface entre ces nanofibres étant recouverte par une couche de ce même polymère.

Un procédé de réalisation d'un dispositif à surface hydrophobe et/ou lipophobe comporte alors les étapes suivantes :
- dépôt de nanofibres sur une surface dudit dispositif,
- gainage de ces nanofibres par un polymère hydrophobe et/ou lipophobe, réalisé par une technique de dépôt physique par voie sèche, ou par une technique d'électro-greffage.

Par exemple ce procédé comporte les étapes suivantes :
- une étape de dépôt de nanofibres de carbone sur une surface d'une pièce, qui comprend successivement :
   - un dépôt de catalyseur par une méthode PVD ("Physical Vapor Deposition"), le catalyseur étant déposé sous vide à une pression de quelques 10⁻³ mbar, une cible composée d'un matériau catalytique étant bombardée par un flux d'argon ionisé, les atomes de la cible ainsi éjectés recouvrant cette surface,
   - l'introduction de la pièce ainsi recouverte dans l'enceinte d'un four CVD sous vide pour réaliser le dépôt de nanofibres de carbone, le catalyseur étant tout d'abord mis en goutte sous l'effet de la montée en température de la pièce, un précurseur d'hydrocarbure étant ensuite introduit dans cette enceinte, la croissance des nanofibres de carbone s'effectuant à l'endroit où le catalyseur est mis en goutte.
- une étape de gainage des nanofibres par un polymère hydrophobe avec une technique PECVD ("Plasma enhanced chemical vapor deposition") ou par une technique d'électro-greffage.

Lors de l'étape de dépôt, la pression se situe par exemple entre 0,1 et 3 mBar. Un précurseur de polysiloxane (hexamethyl disiloxane, Octamethyl cyclotetrasiloxane, hexamethyldisilane, diphenyl methylsilane,...) ou carbofluoré est introduit dans l'enceinte et dilué dans un gaz porteur (Ar, He, H2,...). L'épaisseur du tapis de nanofibres déposé est de l'ordre d'une centaine de nanomètres.

Cette technique permet de réaliser des nanofibres hydrophobes permettant d'obtenir des angles de contact d'un liquide sur un solide très élevés : par exemple supérieurs à 160°.

La figure 9 représente un dispositif de ce type, à surface hydrophobe et/ou lipophobe, comportant un tapis de nanofibres 120, qui sont totalement gainées par un film polymère 121, hydrophobe et/ou lipophobe, continu. La surface 122 existant entre ces nanofibres est, elle aussi, recouverte par une couche de ce même polymère.

La continuité du film polymère permet le collage ou la fixation solide des nanofibres sur la surface 123.

Le gainage peut être réalisé par une technique de dépôt physique par voie sèche ou par une technique d'électro-greffage.

On peut ainsi avoir les caractéristiques suivantes :
- exemple de nanofibres utilisées : nanofibres de carbone,
- exemple de film polymère utilisé : polysiloxne ou polymère carbofluoré,
- diamètre d'une nanofibre 120 : environ 20 à 30 nm,
- longueur d'une nanofibre : environ 3 µm,
- épaisseur du film polymère hydrophobe : environ 50 nm.

Selon encore un autre exemple, un dispositif tel que celui de la figure 1 peut être réalisé avec les paramètres suivants :
- Ecartement entre les électrodes : environ 7 mm,
- Electrode inférieure : du type nanofibre gainée avec un film de polymère, comme expliqué ci-dessus ;
- Diélectrique liquide : huile minérale de densité 0,84.
- Liquide employé pour une goutte : solution aqueuse de chlorure de sodium 0,5M.
- Volume d'une goutte : 2 µl.
- Tension nécessaire pour le décollage d'une goutte : de l'ordre de 950V.

## Revendications

1. Dispositif de déplacement réversible d'au moins un volume de liquide (10,40) sous l'effet d'une commande électrique, comprenant des premiers moyens électriquement conducteurs (8,28,78), des deuxième moyens électriquement conducteurs (4,24,54,64,74), et des moyens pour induire un déplacement réversible d'un volume de liquide, depuis les premiers moyens vers les deuxièmes moyens électriquement conducteurs, sans contact avec ces moyens conducteurs lors du déplacement.

2. Dispositif selon la revendication 1, les deuxièmes moyens électriquement conducteurs étant recouverts d'une couche (6,26,76) d'un matériau diélectrique non mouillant ou faiblement mouillant.

3. Dispositif selon la revendication 1, les deuxièmes moyens électriquement conducteurs comportant un tapis de nanofibres (120), par exemple des nanofibres de carbone, gainées par un film polymère hydrophobe et/ou lipophobe continu, par exemple un film de polysiloxane ou un polymère carbofluoré.

4. Dispositif selon l'une des revendications 1 à 3, les premiers moyens électriquement conducteurs étant hydrophobes.

5. Dispositif selon l'une des revendications 1 à 4, les premiers moyens électriquement conducteurs comportant un tapis de nanofibres (120), par exemple des nanofibres de carbone, gainées par un film polymère hydrophobe et/ou lipophobe continu, par exemple un film de polysiloxane ou un polymère carbofluoré.

6. Dispositif selon l'une des revendications 1 à 4, les premiers moyens électriquement conducteurs étant recouverts d'une couche (7,77,87) de matériau diélectrique non ou faiblement mouillant et comportant des moyens (14) de transfert de charges.

7. Dispositif selon la revendication 6, dans lequel les moyens de transfert de charge comportent un fil (14,44,84).

8. Dispositif selon l'une des revendications 6 ou 7, les moyens de transfert de charge étant situés au voisinage ou contre la couche de matériau diélectrique déposée sur les premiers moyens électriquement conducteurs.

9. Dispositif selon l'une des revendications 6 ou 7, les premiers moyens électriquement conducteurs comportant au moins trois électrodes (78-1, 78-2, 78-3), des premier et deuxième moyens (70,71) de transfert de charge étant respectivement situés au voisinage de deux électrodes non voisines.

10. Dispositif selon l'une des revendications 1 à 9, comportant en outre des moyens (2,22,25,85) pour appliquer une tension entre les premiers et les deuxièmes moyens électriquement conducteurs.

11. Dispositif selon l'une des revendications 1 à 10, les premiers moyens électriquement conducteurs comportant une matrice (28) d'électrodes,s'étendant suivant une ou deux dimensions.

12. Dispositif selon l'une des revendications 1 à 11, les seconds moyens électriquement conducteurs comportant une matrice d'électrodes (54,64).

13. Dispositif selon l'une des revendications 1 à 12, les premiers et/ou les seconds moyens électriquement conducteurs étant muni de moyens (82,88) de contrôle de la température.

14. Dispositif selon la revendication 13, l'un ou l'autre des premiers ou seconds moyens conducteurs étant munis de au moins deux moyens (88,82) de contrôle de la température.

15. Procédé de déplacement d'un volume de liquide, dans lequel ledit volume est initialement en contact avec un premier substrat comportant des premiers moyens électriquement conducteurs (8,28,78), le procédé comportant :
- l'application d'une tension entre les premiers moyens électriquement conducteurs et un second substrat comportant des seconds moyens électriquement conducteurs, et distant du premier substrat d'une distance supérieure au diamètre du volume de liquide à déplacer, et le déplacement du volume de liquide du premier substrat vers le deuxième substrat,
- puis un déplacement du deuxième substrat vers le premier substrat.

16. Procédé selon la revendication 15, le premier substrat comportant en outre, sur les premiers moyens conducteurs, une couche (7,27,77,87) de matériau diélectrique non mouillant pour le volume de liquide, des moyens (14,44,84) de transfert de charge étant associés au premier substrat pour transférer une charge électrique depuis le volume de liquide lorsque celui-ci est en contact avec ladite couche de matériau diélectrique.

17. Procédé selon l'une des revendications 15 ou 16, le second substrat comportant une couche (6,26,54,76,86) de matériau diélectrique non mouillant ou faiblement mouillant pour le liquide dont est constitué le volume de liquide, cette couche étant présente sur les seconds moyens conducteurs.

18. Procédé selon la revendication 17, le volume de liquide étant, après déplacement vers le second substrat, maintenu contre la couche de matériau diélectrique présente sur les deuxièmes moyens électriquement conducteurs.

19. Procédé selon la revendication 17, des moyens (13,21) de transfert de charge étant associés au second substrat pour transférer une charge électrique depuis le volume de liquide lorsque celui-ci est en contact avec le second substrat.

20. Procédé selon l'une des revendications 15 à 19, le volume de liquide étant ensuite ramené sur le premier substrat.

21. Procédé selon la revendication 20, le volume de liquide étant ramené en imposant un champ électrique de sens opposé à celui employé pour transférer la goutte du premier substrat vers le second substrat.

22. Procédé selon l'une des revendications 15 à 21, les premiers moyens électriquement conducteurs comportant une première matrice (28) d'électrodes.

23. Procédé selon la revendication 22, le volume de liquide étant en outre déplacé le long du premier substrat, par activation successive de différentes électrodes de la première matrice d'électrodes.

24. Procédé selon la revendication 23, le volume de liquide étant déplacé d'une position sur le premier substrat située au-dessus d'une première électrode (78-1) de la matrice d'électrode vers le second substrat, puis étant ramenée vers le premier substrat, à une position située au-dessus d'une deuxième électrode (78-2, 78-3) différente de la première électrode.

25. Procédé selon l'une des revendications 15 à 24, les seconds moyens électriquement conducteurs comportant une seconde matrice (54, 64) d'électrodes.

26. Procédé selon l'une des revendications 22 à 25, au moins deux électrodes de la première matrice et/ou au moins deux électrodes de la seconde matrice étant portées à des températures différentes entre elles.

27. Procédé selon l'une des revendications 15 à 26, les premier et second substrats étant portés à des températures différentes entre elles.

28. Procédé selon l'une des revendications 15 à 26, le volume de liquide étant soumis à un champ alternatif.
